# FASCICULE DE BREVET EUROPEEN

(11) **EP 3 676 677 B1**
(45) Date de publication et mention de la délivrance du brevet: **13.10.2021**
(21) Numéro de dépôt: 18756254.1
(22) Date de dépôt: 24.08.2018
(51) Int. Cl.: G05B 19/418, G01M 11/02

(54) **MÉTHODE D'AUDIT DE QUALITÉ EN LIGNE EN "TEMPS REEL" D'UN PROCESSUS NUMÉRIQUE DE FABRICATION DE LENTILLES OPHTALMIQUES**
VERFAHREN ZUR ECHTZEIT- UND INLINE-PRÜFUNG DER QUALITÄT EINES DIGITALEN BRILLENGLASHERSTELLUNGSVERFAHRENS
METHOD FOR AUDITING IN "REAL-TIME" AND IN-LINE THE QUALITY OF A DIGITAL OPHTHALMIC LENS MANUFACTURING PROCESS

(30) Priorité: 28.08.2017 BE 201705592
(43) Date de publication de la demande: 08.07.2020
(73) Titulaire: Automation & Robotics S.A., 4800 Verviers (BE)
(72) Inventeur: LAURENT, Christian, 4800 Verviers (BE); PAEME, Sabine, 4432 Alleur (BE); ZANGERLE, Thomas, 4890 Thimister-Clermont (BE)
(74) Mandataire: AWA Benelux
(86) Numéro de dépôt international: PCT/EP2018/072923
(87) Numéro de publication internationale: WO 2019/042899

(56) Documents cités:
- WO-A1-2017/133970
- US-A- 5 461 570
- US-A1- 2011 153 248

## Description

### Domaine de l'invention

La présente invention concerne le domaine des procédés, méthodes ou processus numériques de fabrication utilisés pour la fabrication de lentilles de lunettes dans les laboratoires de production de lentilles de prescription (Rx).

L'invention concerne en particulier la fourniture d'un procédé automatique, réactif et précis permettant un audit en temps réel du processus de fabrication. Un tel audit devra être basé sur l'analyse des résultats d'une cartographie de puissance optique mesurée offrant une haute résolution ainsi qu'une carte d'erreur précise de ladite puissance optique sur la surface des lentilles. Cet audit s'applique aux produits issus d'une production normale de lentilles à livrer (ou production journalière).

La présente invention concerne également un procédé applicable aux mesures de puissance d'une seule surface de lentille (mesure par réflexion, balayage de surface, etc.) évaluant la réplication du design de cette seule surface usinée de la lentille, généralement immobilisée sur un bloc de surfaçage, permettant d'auditer au moins une partie limitée des étapes du processus de fabrication.

Enfin, le procédé d'audit s'applique à tout processus de fabrication utilisé pour la fabrication de lentilles de lunettes.

### Etat de la technique et problème à résoudre

L'industrie ophtalmique a évolué depuis une situation où des designs définis et immuables étaient reproduits en série (par moulage, etc.) chez le fabricant de semi-finis, via un processus de production de masse bien maîtrisé, et dont un nombre restreint d'échantillons était contrôlé en quelques points de la surface de façon à garantir la réplication du design, jusqu'à l'avènement du surfaçage numérique qui a complètement changé la façon de fabriquer des lentilles. Tout design individualisé et personnalisé peut maintenant être directement surfacé (usiné) sur la lentille (ce qui est appelé « réplication du design ») dans le laboratoire Rx.

Cette évolution a un certain nombre de conséquences:
- le processus numérique de fabrication est délicat et nécessite une maintenance continue;
- la qualité attendue du produit final est plus élevée, mais est beaucoup plus difficile à garantir étant donné la difficulté plus importante à repérer et quantifier une grande diversité de défauts apparaissant à n'importe quelle position de la surface, sur des designs individualisés (tous différents);
- la responsabilité de la fabrication de la surface progressive a été transférée du fabricant de semi-finis (production de masse) au laboratoire Rx (production individualisée).

Le processus numérique de fabrication implique une séquence d'étapes (processus multi-étapes), comme par exemple, dans le cas d'un surfaçage numérique: blocage du semi-fini, surfaçage d'une (ou deux) surface(s) de lentille, polissage de lentille, gravure des repères sur la surface de la lentille, etc., menant à une grande diversité de défauts possibles affectant la qualité finale de la lentille.

Des paramètres externes dits paramètres d'environnement, qui ne sont pas liés à la lentille elle-même ni au processus de fabrication, jouent un rôle sur la qualité du processus (par exemple la température du laboratoire, etc.)

De nombreux paramètres de la lentille dits paramètres « lentille » jouent un rôle sur la qualité du produit issu d'un processus sous contrôle ou non : l'indice du matériau (réfraction), des paramètres du "design" de la lentille, et plus généralement des paramètres géométriques et optiques, etc. Dans les laboratoires de production, en raison de la grande diversité des produits, de nombreux paramètres du design peuvent jouer un rôle important sur la qualité de la lentille pendant la production normale.

Enfin, des paramètres relatifs au procédé de fabrication, qui ne sont pas liés à la lentille elle-même, jouent un rôle sur la qualité du processus (par exemple la vitesse d'un outil, etc.).

Les machines d'inspection sont au centre de la gestion de la qualité du laboratoire et sont essentielles pour maintenir à un niveau élevé la qualité pour chaque produit expédié.

Dans de nombreux cas, l'inspection est effectuée en mesurant la puissance par transmission avec un focomètre sur un nombre limité de points (un, deux ou trois points par exemple) définis par certaines normes, sans évaluer la réplication du design sur toute la surface. L'ensemble de la surface n'est vérifié que pour des défauts très importants par le biais d'une évaluation visuelle de la qualité des lentilles en utilisant un éclairage approprié pour mettre en évidence certains défauts de surface (par ex: projection lumineuse à travers la lentille et analyse de l'image projetée sur un écran diffusant), sans mesure objective précise.

Parmi les solutions d'inspection disponibles, l'inspection basée sur cartographie de la puissance par transmission est la solution d'inspection la plus appropriée pour le laboratoire de verres Rx. Ainsi, l'inspection sur base de la cartographie de mesure de puissance par transmission est devenue essentielle pour garantir la qualité du processus de fabrication « freeform ».

Souvent, les machines d'inspection basées sur la cartographie de puissance sont utilisées pour classer les lentilles mesurées de manière "binaire" entre les "bons" et "mauvais" produits, mais les actions correctives ne sont prises que lorsque le taux de rejet a atteint un seuil donné, souvent bien après l'apparition du problème dans le processus de production, ce qui entraîne une perte de temps et d'argent.

Dans de nombreux cas, la technologie de cartographie est également utilisée lors des audits de qualité des laboratoires. De temps en temps, un ensemble défini de lentilles est produit et les résultats des cartographies sont analysés par des experts. Bien que ces audits fournissent des données utiles et objectives sur la qualité de la production et conduisent déjà à des décisions pertinentes, elles sont souvent hors délai.

Les audits plus fréquents sont basés sur l'analyse de l'évolution d'un ou de plusieurs paramètres mesurés sur une lentille donnée, bien sélectionnée et régulièrement produite par le processus de fabrication de lentille afin de détecter les dérives de ce dernier.

Par exemple, le document EP 2 214 868 A1 décrit un procédé permettant de contrôler un processus de fabrication de lentilles ophtalmiques comprenant les étapes consistant à:
a) fabriquer une lentille « maître » selon un processus de fabrication, en utilisant un dispositif de fabrication donné ;
b) mesurer au moins un paramètre de la lentille maître de l'étape a), en utilisant au moins un dispositif de mesure ;
c) enregistrer la valeur du paramètre ;
d) répéter régulièrement les étapes a) à c) et vérifier l'évolution du paramètre dans le temps ;
dans lequel l'évolution d'au moins un paramètre du dispositif de fabrication utilisé pendant le processus de fabrication de la lentille est contrôlé/suivi au fil du temps et l'évolution dans le temps d'au moins un paramètre de la lentille maître est liée à l'évolution dans le temps d'au moins un paramètre du dispositif de fabrication.

Ce document associé au principe du contrôle statistique des processus (SPC), utilisant des représentations graphiques sous la forme de graphes de contrôle avec des limites inférieures et supérieures pour un paramètre mesurable, sur la base de mesures uniques, permet de surveiller ponctuellement le processus de fabrication pour une classe de produits et de défauts donnés. Ce procédé est bien connu de l'homme de métier. Ainsi, un processus de production en série peut être arrêté durant des intervalles de temps définis pour être consacré à la fabrication d'une lentille maître, c'est-à-dire une lentille utilisée comme échantillon d'apprentissage, dont le design est bien connu et maîtrisé, et dont une mesure bien choisie est sensible aux variations du (des) paramètre (s) de processus qu'on souhaite étudier. L'objectif est de contrôler la stabilité du processus de fabrication (paramètre), de temps à autre (lors de la production de la lentille maître), par comparaison avec des tolérances prédéterminées et de ne pas évaluer la qualité en temps réel en contrôlant chaque lentille produite. Il n'y a pas de diversité de la lentille-maître: toutes les lentilles produites ont exactement le même design. Un seul, ou un nombre très limité de mesures est effectué sur chaque lentille-maître, par exemple en un point correspondant à la vision de près et/ou de loin.

Dans ce contexte, le demandeur fournit déjà sur le marché des dispositifs d'inspection via cartographie de puissance par transmission avec la résolution et la précision nécessaires pour mettre en évidence les défauts de la lentille sur base d'une carte d'erreur. Cette dernière est calculée comme la différence entre la carte de puissance optique par transmission / de surface mesurée et la carte de référence/théorique de puissance par transmission/de surface attendue d'une lentille parfaite (c'est-à-dire avec une réplication parfaite du design).

Une analyse automatique de la carte d'erreur facilitant l'évaluation des lentilles est fournie. Elle fournit des résultats quantitatifs sous la forme d'un set de différents critères d'écart au design théorique, calculés sur une zone donnée de la surface de la lentille. Parmi les critères évalués, un critère unique calculable numériquement de la qualité globale de chaque lentille, nommé Global Mapping Criterion (en abrégé "GMC™", Automation & Robotics, Verviers, Belgique) permet de tenir compte tous les types de défauts et est valable pour toutes les variantes de paramètres lentille/processus/environnement. Ce critère de qualité globale de lentilles combine une quantification pondérée de tout défaut résultant du processus de fabrication et affectant le niveau de qualité de réplication du design de la lentille. Il a été ajusté pour correspondre au mieux à l'évaluation d'un expert sur le terrain. Cette quantification est basée sur les valeurs de la carte d'erreur discrétisée en un nombre approprié de points de mesure répartis sur l'ensemble de la surface de la lentille. D'une certaine manière, il fournit, automatiquement et avec une répétabilité élevée, une évaluation de qualité globale de la réplication du design (très) similaire à l'évaluation d'un expert.

En résumé, dans l'art antérieur,
- le processus multi-étapes complexe,
- la grande diversité des lentilles (voir aussi [1]),
- la grande diversité des défauts,
- l'influence élevée de nombreux paramètres « lentilles » et de l'environnement sur la qualité, induisant une qualité « lentille » variable pour un processus sous contrôle;
- la quantité énorme de données fournies par l'inspection cartographique sur les lentilles produites, etc.,
rendent l'interprétation automatique des cartes de puissance impossible à réaliser de manière efficace en termes de qualité de fabrication.

Le document US 2011/0153248 A1 concerne un procédé pour mesurer automatiquement et évaluer quantitativement la qualité optique d'une lentille ophtalmique, telle que, par exemple, une lentille de contact. Le procédé mesure une lentille ophtalmique avec un instrument de mesure d'une phase optique pour acquérir des données mesurées. La méthode crée un ensemble de métriques objectives de qualité optique dans un logiciel de calcul. Et, le procédé applique les données mesurées à au moins une des métriques objectives de qualité optique pour déterminer la qualité de lentille.

### Buts de l'invention

La présente invention utilise des cartes d'erreur de puissance telles que fournies par un procédé d'inspection réalisant la cartographie de puissance optique respectivement par transmission ou de surface, fournissant des informations sur les défauts liés à la plupart des étapes critiques de la fabrication de lentilles, et par conséquent, fournissant l'avantage d'évaluer la qualité de la fonction finale des lentilles (réfraction de la lumière).

Un but de l'invention est de construire un signal de retour (feedback) approprié sur le procédé basé sur les résultats de l'inspection cartographique, grâce à une utilisation automatique de l'ensemble des informations contenues dans la carte d'erreurs.

Un autre but de l'invention est de fournir un procédé d'audit réactif et précis d'un processus numérique de fabrication de lentille. Un tel audit devra être basé sur l'analyse des résultats de mesure d'une cartographie précise de haute résolution de l'erreur de puissance optique sur la surface de la lentille pour les lentilles provenant de la production normale.

L'invention vise également à fournir un audit de qualité innovant de toute unité de fabrication utilisée pour réaliser une des étapes de production des lentilles, sur la base d'une inspection de cartographie haut de gamme et de solutions d'analyse intelligente des données, destinées à améliorer la qualité et le rendement ainsi qu'à réduire les coûts.

Le procédé présenté ici s'applique également à des mesures de puissance de surface évaluant la réplication du design d'une seule surface (mesure par réflexion, balayage de la surface, etc.) de la lentille (généralement fixée sur le bloc de surfaçage), pour l'audit d'une partie limitée des étapes, ou de chaque étape, du processus de fabrication.

### Principaux éléments caractéristiques de l'invention

La présente invention est décrite plus en détail dans les revendications ci-après. On notera que l'on a réservé plutôt le terme « procédé » à la méthode de modélisation et d'évaluation ou d'audit de l'invention et plutôt le terme « processus » au procédé ou à la méthode numérique de fabrication de lentilles ophtalmiques.

Selon un mode de réalisation de l'invention, un procédé de modélisation et d'évaluation quantitative d'un niveau de qualité globale d'une lentille ophtalmique en temps réel est décrit, ladite lentille ayant des paramètres «lentille» et d'environnement donnés et étant produite par une méthode ou un processus numérique de fabrication de lentilles, ledit procédé de modélisation et d'évaluation étant mis en œuvre par ordinateur et comprenant les étapes suivantes:
- la mise au point, sur la base d'un premier ensemble d'apprentissage représentatif, en vue de reproduire automatiquement et avec haute reproductibilité le travail d'évaluation d'un expert, constitué de lentilles produites par le processus de fabrication, d'un critère unique calculable numériquement de la qualité globale de fabrication de chaque lentille, fournissant pour chaque lentille fabriquée une quantification de qualité globale évaluée à partir de la carte des écarts entre la carte de puissance optique de référence/théorique par transmission/de surface, ou une carte équivalente, et la carte de puissance optique réelle, mesurée par transmission/de surface, ou une carte équivalente, et corrigée, ladite correction de la carte réelle mesurée de puissance étant réalisée sur base de la connaissance des écarts systématiques attendus lors d'une ou plusieurs des étapes du processus de fabrication maîtrisées et évaluées indépendamment, la carte des écarts correspondant à l'évaluation desdits écarts en un nombre approprié et suffisamment grand de points de mesure répartis sur la surface de la lentille;
- l'obtention et l'optimisation, par une méthode d'apprentissage, sur la base d'un second ensemble sélectionné représentatif constitué de lentilles mesurées produites par le processus de fabrication, d'un modèle mathématique fournissant une transformation entre les paramètres « lentille » et d'environnement de chaque lentille fabriquée et le critère de qualité globale attendu si cette lentille avait été produite en utilisant le processus de fabrication dans un état donné, généralement stable, ajusté et fixe, par le biais de la minimisation de la différence entre la sortie du modèle pour ledit critère de qualité globale de lentille et la valeur réelle calculée numériquement du critère de qualité globale de la lentille, sur la base dudit second ensemble d'apprentissage de lentilles, ladite méthode d'apprentissage comprenant, sur base du second ensemble d'apprentissage de lentilles sélectionné, l'identification des paramètres «lentille» et d'environnement d'entrée pertinents jouant un rôle sur la qualité des lentilles produites durant la production normale, de sorte que la sortie du modèle de qualité globale unique mesurable des lentilles soit basée sur un ensemble de paramètres de lentilles et d'environnement d'entrée pertinents.

Selon un mode de réalisation de l'invention, un procédé d'audit de qualité en ligne en temps réel de la ligne de production « freeform » est fourni, au moyen d'un "score de qualité du processus de fabrication", construit suite à la normalisation du niveau de qualité globale réel calculé par rapport à la valeur attendue de ce score pour des lentilles fabriquées par ce même processus, sous contrôle.

Selon un mode de réalisation de l'invention, un procédé pour fournir un "score de qualité de l'unité de fabrication", pour toute unité du processus numérique de fabrication d'une étape à évaluer, appelé "unité évaluée", est décrit, ledit score de qualité de l'unité étant calculé à partir des valeurs calculées sur un nombre limité de lentilles fabriquées obtenues lors d'une production normale, indépendamment des variantes des paramètres « lentille » et de l'environnement, et indépendamment de l'état de contrôle des autres unités impliquées dans le processus de fabrication.

### Description brève des dessins

La Fig. 1 représente schématiquement le schéma global du procédé selon la présente invention, définissant la qualité d'un processus de fabrication de lentille numérique (qualité de réplication du design).
La Fig. 2 représente schématiquement le concept de critère de qualité globale calculable numériquement d'une lentille, calculé à partir de la quantification de l'erreur globale de réplication du design.
La Fig. 3 représente l'augmentation de la valeur du paramètre GMC lorsque l'importance du défaut (ici un défaut annulaire) augmente.
La Fig. 4 représente le cas d'un processus sous contrôle stable produisant des lentilles similaires avec des caractéristiques lentilles différentes (additions), l'évolution temporelle correspondante du GMC étant un signal instable, en raison de sa sensibilité aux paramètres lentille (dans ce cas, l'addition seulement).
Les Fig. 5A et FIG. 5B représentent schématiquement la définition de la qualité de l'unité de fabrication de la lentille.
La Fig. 6 montre l'évaluation de la qualité d'une unité de fabrication d'une lentille donnée pour un routage lentille défini.
La Fig. 7 montre tous les routages lentille existants (unités liées, directement liées, non directement liées et non liées) à une unité de production donnée.
La Fig. 8 montre la configuration générale du procédé de l'invention dans laquelle le modèle de processus de fabrication de la lentille de contrôle est ajusté.

### Description détaillée des modes de réalisation préférés

Par souci de clarté, nous donnons ci-après un certain nombre de définitions, qui sont partie intégrante de la divulgation de l'invention.

### Définitions

Lentille (souvent appelée lentille *freeform*): une lentille optique généralement pour lunettes ophtalmiques, souvent personnalisée, avec au moins une surface définie numériquement à réaliser en utilisant un processus numérique de fabrication.

Qualité d'une lentille (définition opérationnelle pour une compréhension aisée): aptitude d'un ensemble de caractéristiques intrinsèques d'une lentille à satisfaire sa fonction finale, à savoir la réfraction de la lumière. Pratiquement, toutes les considérations relatives à la « qualité » peuvent être appliquées à l'amplitude d'erreur correspondante associée aux défauts mesurés (qualité de réplication du design).

Processus numérique de fabrication de lentilles: un processus utilisant un ou plusieurs moyens contrôlés de manière informatique pouvant produire une (des) surface (s) lisse (s), définies numériquement et éventuellement complexes. Divers moyens successifs peuvent être mis en œuvre, y compris des moyens pour effectuer l'étape de surfaçage du matériau (sur un côté, deux côtés) à partir d'un semi-fini ou d'une fabrication digitale additive en 3D, etc. Une partie sélectionnée du processus de fabrication à plusieurs étapes de lentilles est considérée ici, incluant une ou plusieurs machines, outils ou opérations (voir [1]).

Temps réel : les indicateurs sont mis à jour lors de la mise à disposition des résultats d'inspection d'une nouvelle lentille produite par le processus de fabrication.

Processus de fabrication multi-étapes: une séquence d'étapes du processus de fabrication, telles que, pour le surfaçage numérique des lentilles: le choix et la vérification du semi-fini, le blocage du semi-fini, le surfaçage/usinage de la surface de la lentille, le polissage de la surface de la lentille, la gravure des repères de référence sur la surface de la lentille, etc.

Processus de fabrication bien ajusté ou sous contrôle : en SPC, tout processus de fabrication qui est stable, c'est-à-dire qui ne déclenche pas les règles de détection (ex. *Western Electric rules*) des cartes de contrôle.

Unité du processus de fabrication numérique (lentille): le sous-processus de fabrication le plus petit soumis à la sélection dans les opérations de routage lors de la fabrication de lentille. Dans les cas extrêmes, il peut s'agir d'un outil utilisé sur une machine ou d'une gamme complète de machines.

Production normale ou de routine: par opposition à la production de lentilles spécifiques pour tests, la production normale désigne la production routinière journalière du laboratoire de prescription.

Paramètres « lentille »: ensemble des paramètres spécifiant/définissant une lentille à produire et jouant un rôle sur la qualité finale de ladite lentille lorsqu'elle est produite: indice du matériau (réfraction), paramètres du design de la lentille, et plus généralement paramètres géométriques et optiques, etc. Dans les laboratoires de production, en raison de la grande diversité des produits, de nombreux paramètres des lentilles jouent un rôle important sur la qualité de la lentille pendant la production normale ou de routine.

Paramètres d'environnement: paramètres, qui sont externes à la lentille elle-même et au processus de fabrication, mais qui jouent un rôle sur la qualité du processus (ex : la température du laboratoire, etc.).

Paramètres pertinents: qu'il s'agisse de paramètres « lentille », de paramètres d'environnement ou de paramètres de processus de fabrication, les paramètres pertinents désignent les paramètres influençant effectivement la qualité finale des lentilles produites dans un processus de fabrication donné.

Set, jeu ou ensemble d'apprentissage approprié: un ensemble important de lentilles contrôlées, c'est-à-dire un grand nombre de lentilles présentant idéalement des caractéristiques ou des paramètres aussi diversifiés que dans la production normale, nécessaire pour fournir des informations (apprentissage) sur l'effet de toutes les variantes pertinentes de l'espace de paramètres « lentille » et de l'environnement jouant un rôle sur la qualité des lentilles produites durant la production normale.

Set, jeu ou ensemble d'apprentissage représentatif: un ensemble important de lentilles contrôlées produites par le processus de fabrication couvrant toutes les variantes de défauts de lentille.

Méthode d'apprentissage: désigne l'ensemble des méthodes d'apprentissage supervisé ou non (ex : *principal component analysis* (PCA), régression linéaire ou non-linéaire multivariée, etc.) permettant de réaliser les étapes de sélection des facteurs d'influence et de modélisation des relations entre les paramètres d'influence et la sortie à modéliser.

Carte d'erreur: différence entre la carte de puissance optique par transmission/de surface mesurée et la carte de puissance optique par transmission/de surface de référence / théorique (ou cible) attendue d'une lentille parfaite (c'est-à-dire avec une réplication parfaite du design). Dans le cadre de cette présente invention, la carte d'erreur d'une lentille sera obtenue en un nombre approprié et suffisamment grand de points (ex: 1000 points) répartis adéquatement à la surface d'une lentille (discrétisation de la surface de la lentille).

Motif d'erreur: motif caractéristique qualifiant l'allure générale d'une carte d'erreur, en fonction de la répartition spatiale de l'erreur

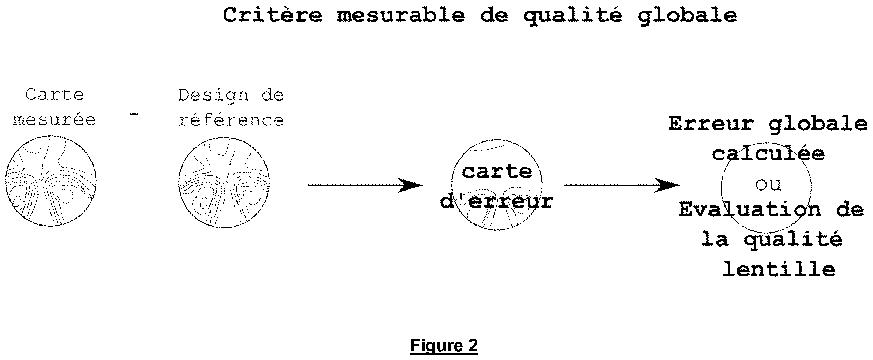

Critère de qualité globale de la lentille (voir Fig. 2): paramètre calculable numériquement fournissant une valeur unique représentative de la qualité de réplication du design d'une lentille fabriquée, caractéristique du motif d'erreur de la lentille, tenant compte de tous les types de défauts concernés et valable pour toutes les variantes de paramètres « lentille », environnement et processus de fabrication (voir ref. [1]).

En d'autres termes, le critère global unique de la qualité de chaque lentille est un paramètre, dont l'évaluation fournit une seule valeur résultant d'une transformation des informations d'une carte d'erreur donnée d'une lentille produite, ladite carte étant discrétisée en un nombre approprié et suffisamment grand de points. Il s'agit d'un critère de quantification global, unique et absolu, dans le sens où il ne dépend pas de l'outil de fabrication spécifique ou d'autres paramètres de processus et d'environnement. Comme mentionné ci-dessus, ce critère est défini pour correspondre à et imiter l'évaluation qui serait obtenue auprès d'un expert, automatiquement et avec une reproductibilité élevée. Notamment, le but de la mise sur pied d'un critère unique de qualité étant de fournir un outil permettant d'imiter l'évaluation de l'expert, il convient de définir ce critère unique de qualité sur base d'un jeu de lentilles de taille suffisante que pour balayer l'ensemble ou la majorité des défauts rencontrés lors de la fabrication. En termes mathématiques, selon un mode de réalisation, il est construit à partir des erreurs de puissance locales mesurées et rassemblées dans la carte d'erreur, mais cela pourrait impliquer également, par exemple, des mesures mathématiques probabilistes sur le nombre approprié et suffisamment grand de points considérés. Un exemple de critère de qualité globale des lentilles est GMC™.

Le critère de qualité globale des lentilles informatiques combine une quantification pondérée valable pour tout type de défaut dû au processus de fabrication et affecte le niveau de qualité de la lentille selon les règles admises ou évaluée directement par l'expert sur le terrain. Cette quantification est basée sur les écarts par rapport aux valeurs théoriques / de référence, de la puissance optique réelle mesurée d'un nombre approprié et suffisamment grand de points de mesure répartis sur la surface de la lentille.

Normalisation d'une valeur basée sur une référence: quantification arithmétique de la distance entre la «valeur» et la «référence» dans un espace donné. Ici, une normalisation est appliquée à une erreur mesurée (en utilisant l'erreur mesurée comme « valeur ») pour obtenir une comparaison avec l'erreur attendue (l'erreur attendue devient la « référence »). Ainsi, une transformation mathématique unique de la valeur de mesure est utilisée pour la rendre comparable à la valeur de référence (normalisation linéaire, ...). Une autre formulation pour la « normalisation » pourrait être le résultat de la comparaison, la différence ou le ratio, etc.

Ecarts systématiques attendus: les écarts entre la lentille théorique et la lentille réalisée dus à une étape particulière et maitrisée du processus de fabrication et pouvant être quantifiés indépendamment. Par exemple, un décalage uniforme de puissance d'un semi-fini peut être mesuré avant l'usinage. Cette mesure permettra de corriger l'évaluation finale de la qualité du procédé d'usinage (pour ne pas tenir compte de l'erreur du semi fini) à partir de la mesure de l'erreur sur une lentille (qui tient compte de l'erreur sur le semi-fini).

La qualité d'un processus numérique de fabrication de lentilles: un score de qualité du processus numérique de fabrication de lentilles, indépendant des variantes des paramètres « lentille » et d'environnement, obtenu par la normalisation du critère de qualité globale de lentille (par exemple GMC) calculé numériquement sur toute lentille produite, rapporté au critère de qualité globale de lentille spécifique attendu calculé pour la même lentille dans une situation de processus bien ajusté (sous contrôle) en utilisant un modèle prenant en compte les paramètres pertinents de l'espace de paramètres (paramètres « lentille » et d'environnement). Pratiquement, une espérance mathématique (moyenne, pondérée ou non) sur un ensemble limité de lentilles peut être calculée pour limiter les fluctuations statistiques. Pour être rigoureux, cette définition s'applique soit à un ensemble homogène d'unités de fabrication (mêmes unités de fabrication pour chaque étape de fabrication), soit à un routage donné (défini comme une séquence d'étapes de fabrication), ou à un ensemble homogène de routages ou, dans le cas d'un ensemble non homogène d'unités de fabrication, il peut s'appliquer à un ensemble représentatif fixe de routages.

Moyenne: une espérance mathématique (moyenne, pondérée ou non)

Qualité d'une unité du processus numérique de fabrication de lentilles: un score de qualité d'une unité du processus numérique de fabrication de lentilles, indépendant des variantes des paramètres « lentille » et d'environnement, obtenu par la normalisation du critère de qualité globale de lentille (par exemple, GMC) calculé numériquement sur toute lentille produite, lorsque le processus de fabrication impliquant l'unité à évaluer est sous contrôle (à l'exception de l'unité à évaluer), rapporté au critère de qualité globale de la lentille spécifique attendu et calculé pour la même lentille dans le cas du processus bien ajusté (sous contrôle) par un modèle prenant en compte les paramètres pertinents de l'espace des paramètres (paramètres « lentille » et de l'environnement). Pratiquement, une espérance mathématique (moyenne, pondérée ou non) sur un ensemble limité de lentilles peut être calculée pour limiter les fluctuations statistiques.

Nombre approprié de points de mesure de la lentille (sur la surface de la lentille): nombre de points sélectionné pour avoir une résolution optimale de mesure avec une répartition spatiale de l'échantillonnage sur la surface de la lentille, en prenant en considération le théorème de Shannon appliqué à la fréquence spatiale des déviations de puissance sur la surface liées aux défauts à détecter. Le nombre de points est compris par exemple entre 100 et 100000 pour les défauts générés par le processus de fabrication numérique de lentilles freeform.

Processus de fabrication ou unité de processus de fabrication sous contrôle: processus de fabrication ou unité du processus de fabrication bien ajusté, au sens de la maîtrise statistique des procédés

État de contrôle (d'un processus de fabrication ou d'une unité du processus de fabrication): indicateur qui indique si le processus est bien ajusté ou non, au sens de la maîtrise statistique des procédés.

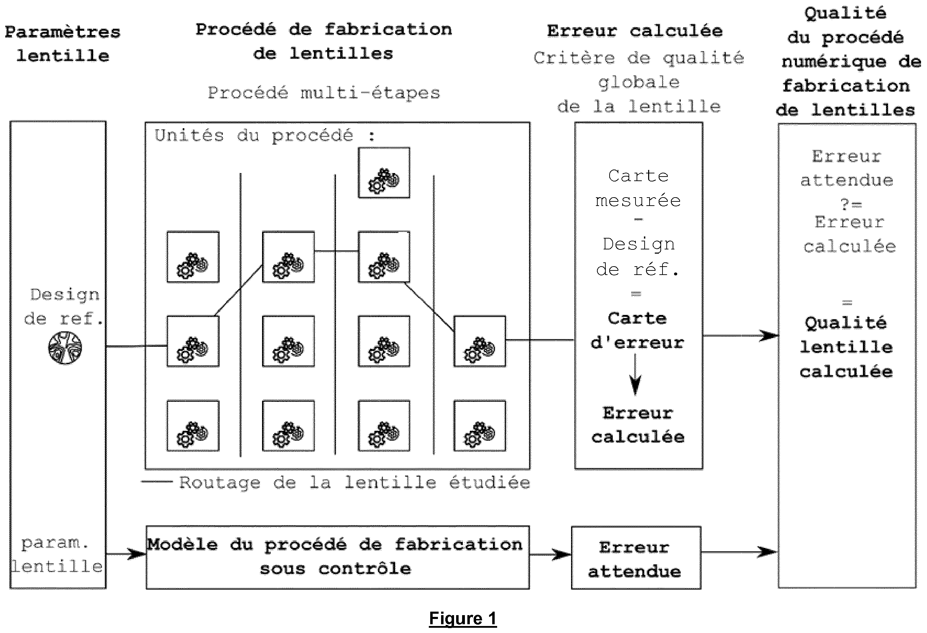

La Fig. 1 montre le schéma global, selon la présente invention, de la méthode pour évaluer la qualité d'un processus numérique de fabrication de lentilles:
- définition des paramètres lentilles et d'environnement parmi toutes les variantes possibles de variables de lentilles et d'environnement, caractérisant un design de référence;
- élaboration d'un modèle du processus de fabrication de lentilles "sous contrôle" conduisant à une erreur attendue;
- définition d'un processus de fabrication en plusieurs étapes (par ex : seul un routage unique est représenté sur la figure 1) conduisant à une l'évaluation de la qualité globale du processus de fabrication à partir de la normalisation de l'erreur de fabrication réelle calculée par rapport à l'erreur de fabrication attendue.

Cette évaluation globale de la qualité du processus apporte un signal de retour (feedback) à la gestion du laboratoire et, en cas de problème de l'outil (dérive, décrochage, etc.), des actions appropriées peuvent être entreprises.

Les étapes détaillées du procédé d'audit, ainsi que de nombreuses applications de celles-ci, sont décrites ci-après.

### Modèle du critère de qualité globale de lentille

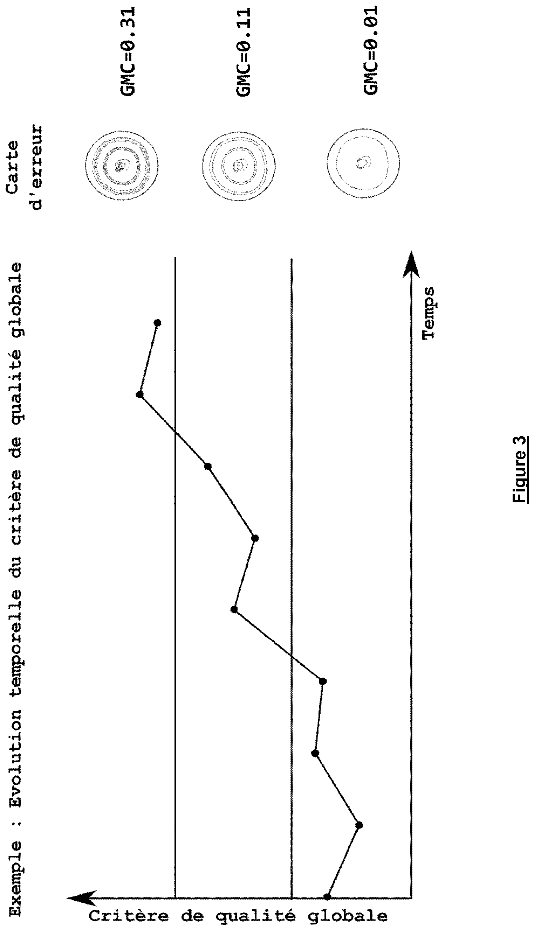

Selon certains modes de réalisation de l'invention, un procédé fournissant un modèle permettant l'évaluation du niveau de qualité globale attendu d'une lentille ophtalmique est décrit, ladite lentille ayant des paramètres «lentille» et d'environnement et étant produite par un processus numérique de fabrication de lentilles, ledit procédé impliquant les étapes suivantes mises en œuvre avec des moyens informatiques :
- la mise au point, sur la base d'un premier ensemble d'apprentissage sélectionné, représentatif en vue de reproduire le travail d'évaluation d'un expert, constitué de lentilles produites par le processus de fabrication, d'un critère unique, calculable numériquement, de la qualité globale de fabrication de chaque lentille, fournissant pour chaque lentille fabriquée une quantification de qualité globale évaluée à partir de la carte des écarts entre la carte de puissance optique de référence/théorique respectivement par transmission ou de surface, et la carte de puissance optique réelle mesurée respectivement par transmission ou de surface, corrigée, ladite correction de la carte réelle mesurée de puissance étant réalisée sur base de la connaissance des écarts systématiques attendus lors d'une/ou plusieurs des étapes du processus de fabrication maîtrisées et évaluées indépendamment, la carte des écarts correspondant à l'évaluation desdits écarts en un nombre approprié de points de mesure répartis sur la surface de la lentille. Concrètement, la quantification de qualité globale est avantageusement construite sur base d'une combinaison pondérée de grandeurs statistiques (exemples : moyenne, écart type) et/ou de coefficients de décompositions globales (ex : coefficients d'un modèle de la carte d'erreur sous la forme de polynômes de Zernike, décomposition de Fourier) évaluées sur la carte des écarts entre la carte de puissance optique de référence/théorique respectivement par transmission ou de surface et la carte de puissance optique réelle respectivement par transmission ou de surface, et/ou sur toute transformation mathématique de cette carte (ex : dérivées d'ordre quelconque). Le *global mapping criterion* (ou GMC, voir ci-dessus) développé par le déposant en tant que critère d'erreur qualitative / quantitative est considéré comme un critère de qualité globale des lentilles. Le GMC est un nombre unique représentant la qualité globale de la réplication du design basé sur la carte des erreurs. Il fonctionne sur tout motif d'erreur, indépendamment du type et de l'emplacement du défaut. Comme illustré sur la Fig. 3 pour un motif d'erreur annulaire, la valeur du GMC augmente lorsque l'importance du défaut augmente. Le GMC, qui est une valeur réactive et significative, basée sur les résultats significatifs et pertinents de l'inspection par cartographie, est choisi pour créer un signal de retour sur le procédé ;
- l'obtention, sur la base d'un second ensemble de lentilles d'apprentissage sélectionné, représentatif, par une méthode d'apprentissage d'un modèle mathématique et l'optimisation de celui-ci, ledit modèle mathématique fournissant une transformation entre chaque lentille fabriquée définie par ses paramètres «lentille» et de l'environnement et le critère unique calculable numériquement de la qualité globale de chaque lentille attendu des lentilles ophtalmiques produites en considérant le processus de fabrication dans un état donné, généralement stable et ajusté, et en minimisant la (une) différence entre la sortie du modèle attendu pour ledit critère de qualité globale de lentille et la valeur calculée numériquement du critère de qualité globale de lentille sur la base dudit second ensemble de lentilles, ledit procédé d'apprentissage comprenant l'identification, sur la base dudit second ensemble d'apprentissage de lentilles mesurées, de paramètres « lentille » et d'environnement pertinents d'entrée jouant un rôle sur la qualité de la lentille pendant la production normale, de façon à ce que, la sortie du critère global unique calculable numériquement de la qualité de chaque lentille soit basée sur un ensemble de paramètres réunis parmi ces paramètres lentilles et d'environnement d'entrée pertinents.

La première intention de l'invention est de mettre en place un modèle basé sur le critère de qualité globale de lentille (ex. GMC du déposant).

Le modèle reproduit ou imite le comportement de l'outil de fabrication. Le modèle doit être ajusté en minimisant les écarts pour correspondre au fonctionnement de cet outil.

Lorsque l'outil / le processus est sous contrôle, il devra fournir une erreur réelle évaluée par le critère de qualité globale de lentille proche de l'erreur attendue donnée par le modèle.

### Score de qualité du processus

Selon certains modes de réalisation la méthode fournit en outre un score de qualité, appelé "score de qualité de processus" pour un processus numérique de fabrication de lentilles, ledit score de qualité étant calculé à partir d'évaluations sur une seule lentille fabriquée, ou sur un nombre limité de lentilles fabriquées, produit(es) en production normale, et étant indépendant des variantes des paramètres « lentilles » et d'environnement, ladite méthode impliquant en outre les étapes suivantes:
- évaluer numériquement le critère global unique de la qualité pour chaque lentille traitée;
- sélectionner un nombre X de lentilles nécessaires à l'évaluation d'un niveau de qualité du processus numérique de fabrication de lentilles, indépendamment des variantes des paramètres de lentilles et de l'environnement, en tenant compte de la période allouée pour l'évaluation et/ou des considérations statistiques concernant l'influence de la limite du rapport signal sur bruit sur le « score de qualité du processus »;
- quantifier le « score de qualité du processus » sur base de la moyenne de la normalisation de la valeur réelle mesurée du critère global unique calculable de la qualité de toute lentille produite, rapportée à la valeur attendue du critère de qualité global de la lentille donnée par ledit modèle mathématique fournissant la transformation entre ladite lentille et ses paramètres d'environnement pour un état du processus de fabrication donné, généralement stable et sous contrôle.

Le modèle transforme les données correspondant à une lentille donnée dans un environnement donné en un GMC "attendu".

Le score de qualité du processus est quantifié en faisant la moyenne de la différence (ou du rapport) entre le GMC réel calculé pour une lentille fabriquée et le GMC "attendu".

L'analyse de données de production réelles montre que la qualité de réplication du design, et le GMC attendu, dépendent de nombreux paramètres «lentille», car une lentille difficile à fabriquer est plus susceptible d'avoir une erreur de réplication élevée et donc un GMC élevé.

Parmi ceux-ci, on retrouve les paramètres suivants : l'addition, le décentrement, le matériau et la courbure. Par exemple, plus l'addition est importante, plus la difficulté de réaliser la lentille en usinage traditionnel augmente et plus les valeurs attendues pour le GMC sont élevées. C'est pourquoi un signal de retour (feedback) précis et réactif fournissant une quantification de la qualité du processus de fabrication doit être insensible aux paramètres de la lentille. Par conséquent, au lieu d'utiliser directement les valeurs du GMC, on devrait utiliser la valeur normalisée du GMC calculée à partir du GMC attendu si le processus est stable et sous contrôle. Cette valeur attendue est fournie par un modèle du processus sous contrôle, appris sur les données de mesure réelles du laboratoire.

Par conséquent, pour un processus stable et sous contrôle, la production d'un lot d'une même lentille conduit à la même sortie GMC, c'est un cas de production en série. Cependant, la production de lentilles freeform est plutôt une production individualisée et non par lots. Par conséquent, même si le processus est stable et sous contrôle, à un niveau de qualité donné, ce processus produira des lentilles avec des GMC différents, en fonction de la difficulté à produire la lentille donnée.

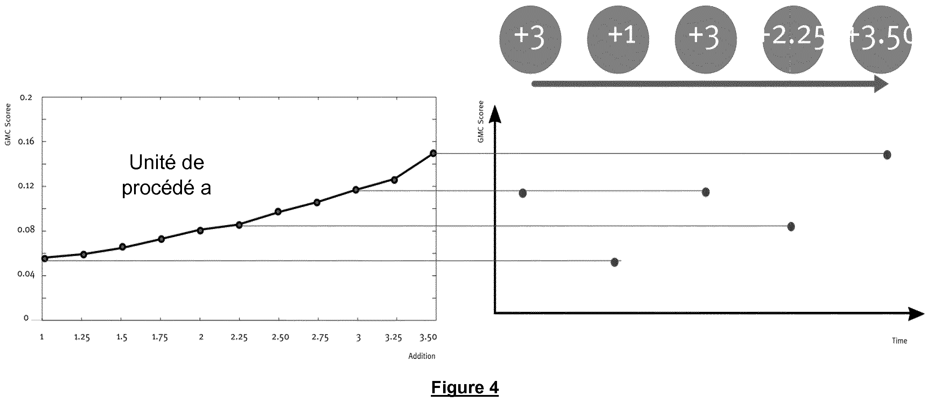

La Fig. 4 présente un cas de processus stable et sous contrôle produisant des lentilles similaires dont le seul paramètre différent est l'addition. L'évolution temporelle correspondante du GMC fournit un signal instable, en raison de sa grande sensibilité aux paramètres « lentille », caractérisant la difficulté intrinsèque à produire chaque lentille. Par conséquent, la valeur du signal GMC n'est pas stable pour un processus sous contrôle à un niveau de qualité donné, la valeur GMC correspond à la qualité du produit, plus qu'à la qualité du processus.

Le score de qualité du processus recherché doit être stable pour un processus stable et sous contrôle même si la lentille étudiée est moins ou moins difficile à fabriquer.

Par conséquent, pour construire un signal de retour approprié sur l'état du processus basé sur le GMC, il faut rendre ce dernier insensible aux paramètres « lentille ». Par conséquent, selon la présente invention, au lieu d'utiliser le signal GMC lui-même, les inventeurs ont utilisé la différence ou le rapport entre le GMC calculé et celui attendu pour le processus supposé sous contrôle. De cette façon, si le GMC est égal à celui attendu dans le contrôle, le processus est toujours considéré comme étant sous contrôle. Cependant, si le GMC calculé est plus élevé que le GMC attendu sous contrôle, cela signifie que le processus a dérivé et n'est plus sous contrôle.

Pour calculer le GMC attendu, qui est la valeur attendue du GMC pour le processus sous contrôle, un modèle du processus sous contrôle doit être construit. Ce modèle doit inclure la relation entre les paramètres lentille et le GMC attendu correspondant, par exemple, dans le cas illustré à la Fig. 4, la relation entre l'addition et GMC.

Un modèle calculé en utilisant une régression multivariée non linéaire conduit à de bons résultats. La normalisation du score de qualité de processus tel que défini ci-dessus, en fonction de la valeur GMC, qui est un score de qualité de produit, a été mise en évidence pour un générateur particulier (non représenté). Comme prévu, étant donné que ces valeurs sont indépendantes des paramètres de la lentille, le signal quantifiant la qualité du processus de fabrication est moins bruité et plus stable que le signal construit directement sur la mesure du GMC des lentilles produites.

Le score de qualité de processus est donc un signal significatif et réactif à utiliser pour obtenir un signal de retour (feedback/rétroaction) du processus.

Une comparaison a été faite pour les trois signaux de retour suivants: score basé sur le taux de rejets, score basé sur les écarts de puissance aux 2 points d'inspection ISO et score de qualité de processus basé sur le GMC (non représenté). Dans l'exemple, la période de temps étudiée s'est terminée par une étape de maintenance effectuée dans le laboratoire en raison d'une augmentation du nombre de lentilles rejetées. Les signaux basés sur le taux de rejet et sur l'analyse de l'erreur sur la puissance en un point de référence montrent une augmentation à la fin de la période, ce qui correspond à une augmentation du nombre de lentilles rejetées. Cependant, le troisième signal montre une croissance constante pendant la période. Cette augmentation est le signe d'une dérive du générateur. Par conséquent, si le laboratoire avait surveillé cette dernière valeur, ils auraient pu effectuer des actions préventives sur le générateur, en évitant une augmentation du nombre de lentilles rejetées.

Le score de qualité du processus est donné pour chaque lentille et fournit des résultats similaires au signal de retour (feedback/rétroaction) de qualité d'un processus de production de masse, bien que chaque lentille soit différente.

### Score de qualité de l'unité de production (ou machine)

Selon certains modes de réalisation de l'invention, le procédé fournit en outre un second score de qualité, appelé "score de qualité de l'unité de production", pour toute unité du processus numérique de fabrication de lentilles à évaluer, appelée "unité évaluée", calculée à partir de l'évaluation de la qualité du processus réalisée sur un nombre limité de produits manufacturés en production normale, et indépendamment des variantes des paramètres « lentille » et d'environnement, ledit procédé impliquant en outre les étapes suivantes:
- enregistrement, pour toute unité de fabrication numérique de lentilles, du « score de qualité de processus » pour chaque lentille traitée;
- sélection d'un nombre Y de lentilles nécessaires à l'évaluation de l'unité de fabrication à évaluer, ou "unité évaluée", en tenant compte de la période allouée à l'évaluation et / ou des considérations statistiques concernant l'influence de la limite du rapport signal sur bruit sur le "score de qualité de l'unité" ;
- calcul du «score de qualité de l'unité» de «l'unité évaluée», en tant que «score de qualité de processus» moyen par rapport à toutes les lentilles Y traitées sur «l'unité évaluée».

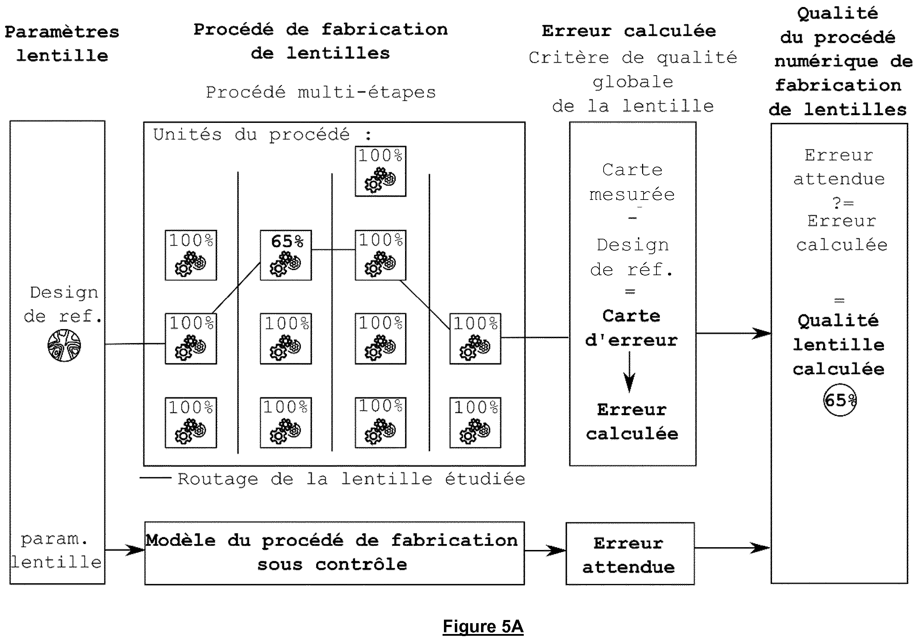

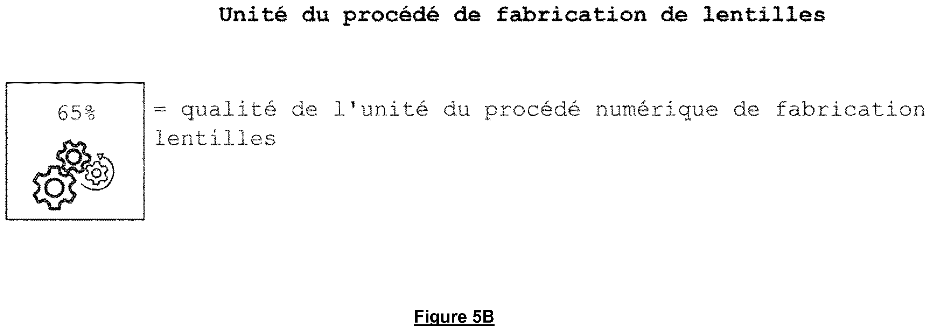

La définition de la qualité de l'unité de fabrication de lentille est donnée sur la Fig. 5A et FIG. 5B. Le score de qualité de l'unité est quantifié, sur la base d'un certain nombre de lentilles mesurées ayant été traitées sur l'unité évaluée, en déterminant un score moyen de qualité de processus en ne tenant compte que des lentilles traitées sélectivement sur une unité particulière. Ces données peuvent être utilisées pour fournir des indicateurs de qualité de machine en temps réel au gestionnaire de laboratoire en cas de flux de production mélangés (laboratoire non organisé en lignes).

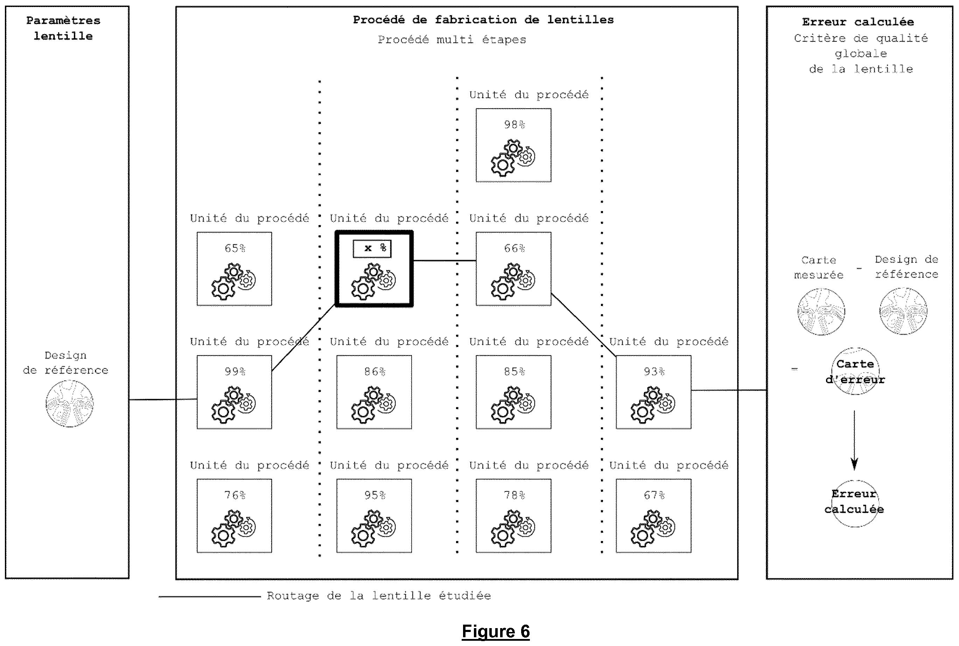

Ces résultats de qualité du processus peuvent être liés aux données de routage de production pour fournir une rétroaction (signal de retour / feedback) en temps réel sur la production. Les données de routage de production rassemblent au minimum la liste des machines utilisées pour produire une lentille donnée et les temps d'entrée et de sortie des diverses unités de fabrication correspondantes (figure 6).

### Score de qualité amélioré de l'unité (ou machine) (tous les routages de lentilles existants avec cette unité)

Dans un processus en plusieurs étapes, les données d'inspection de toutes les lentilles qui ont été exécutées par la même polisseuse, par exemple, seront influencées par la performance des machines suivantes et précédentes dans les flux de production, par exemple le/les générateurs alimentant la polisseuse.

Selon certains modes de réalisation de l'invention, la méthode fournit en outre un troisième score de qualité, appelé "score de qualité amélioré de l'unité de production", pour toute unité de processus de fabrication numérique de lentilles à évaluer, appelée "unité évaluée", calculée à partir de l'évaluation d'un nombre limité de produits manufacturés obtenus lors de la production normale, indépendamment des variantes des paramètres « lentilles » et de l'environnement, et indépendamment de l'état de contrôle des autres unités impliquées dans le processus de fabrication, impliquant également les étapes suivantes:
- enregistrer, pour chaque unité de fabrication numérique de lentille, le «score de qualité de processus» pour chaque lentille traitée;
- déterminer toutes les unités de fabrication de lentilles ophtalmiques liées par un routage, appelées «unités liées à l'unité évaluée» ou «unités liées»;
- sélectionner un ensemble de lentilles Y 'traitées sur l'unité évaluée et / ou sur les "unités liées", ledit ensemble étant nécessaire pour l'évaluation de l'unité évaluée, en tenant compte de la période allouée pour l'évaluation et / ou des considérations statistiques concernant l'influence la limite du rapport signal sur bruit sur le "score de qualité amélioré de l'unité";
- tout en tenant compte de l'ensemble des «scores de qualité de processus» pour l'ensemble de lentilles sélectionnées et tous les routages correspondants, en déterminant mathématiquement le «score de qualité amélioré de l'unité de production» le plus probable de chaque unité des unités évaluées et liées.

Selon ces modes de réalisation, on prend en compte les autres unités sur lesquelles la lentille a été traitée. L'objectif est d'éliminer l'effet des éventuelles unités défectueuses par le biais d'une analyse statistique.

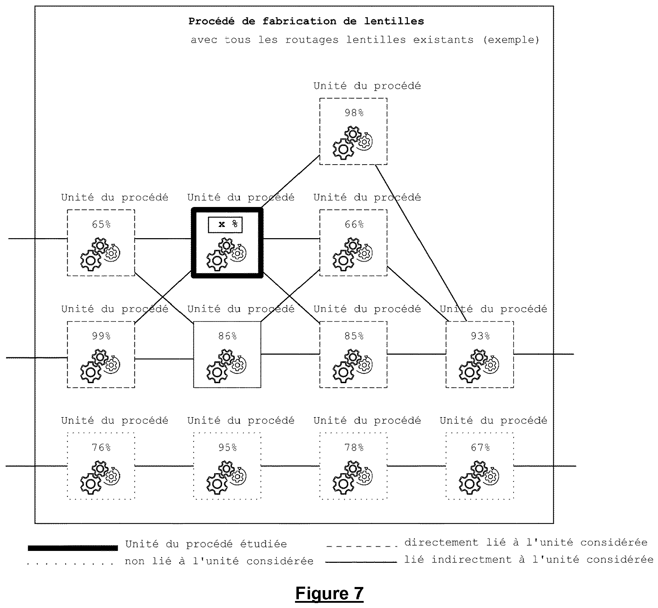

Les unités liées à l'unité évaluée peuvent être les unités liées directement ou non aux étapes qui précédent (ou suivent) l'unité évaluée ou de l'étape de fabrication concernée par l'unité évaluée, mais non directement liée à celle-ci (voir la figure 7).

### Application - Ajustement des paramètres du processus de fabrication

Selon certains modes de réalisation de l'invention, le procédé de base peut être utilisé afin de réaliser un ajustement des paramètres du processus, par le biais d'un monitoring de la quantification du niveau de qualité global attendu d'une lentille, avec n'importe quel paramètre lentille et d'environnement, à produire par le processus numérique de fabrication de lentilles avec ledit ajustement des paramètres du processus.

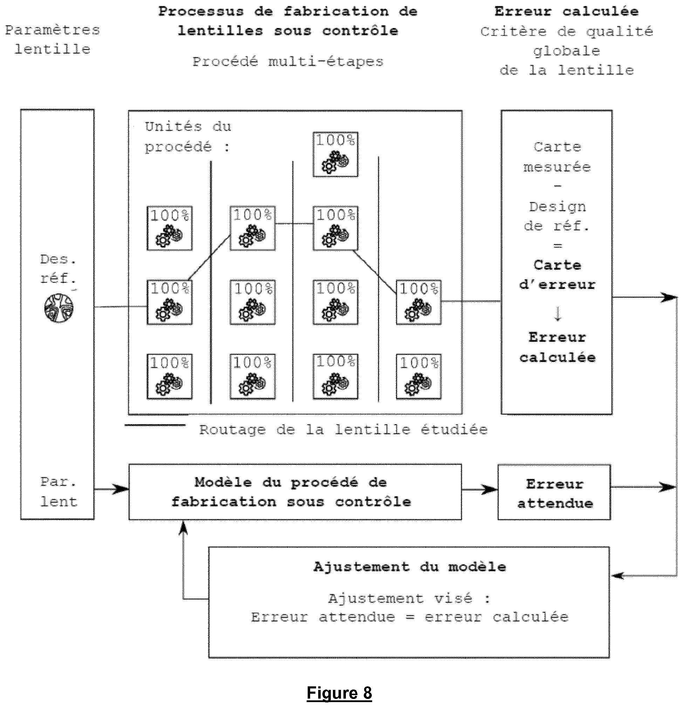

Selon ces modes de réalisation, les paramètres du processus de fabrication ou d'environnement sont modifiés. Le modèle est adapté pour prendre en compte les paramètres « lentille », du processus et d'environnement qui sont modifiés (voir la figure 8).

Selon certains modes de réalisation, un ajustement des paramètres de processus de fabrication est effectué, ce qui conduit à une quantification du score de qualité d'un processus de fabrication de lentille ophtalmique numérique ou d'un "score de qualité de processus", avec ledit ajustement des paramètres du processus de fabrication.

Selon certains modes de réalisation, un ajustement des paramètres de processus est effectué, ce qui conduit à une quantification du score de qualité de n'importe quelle unité de processus de fabrication de lentille ophtalmique numérique, ou "score de qualité unitaire", avec lesdits ajustements des paramètres du processus de fabrication.

Selon certains modes de réalisation, on effectue un ajustement des paramètres sur l'unité de production évaluée, conduisant à une quantification du score de qualité l'unité de processus de fabrication de lentille ophtalmique numérique, ou "score de qualité de l'unité de production", avec ledit ajustement des paramètres de l'unité de fabrication.

### Autres applications

Selon certains modes de réalisation de l'invention, le procédé a une étape supplémentaire consistant à fournir un affichage, pour des lentilles sélectionnées et des paramètres d'environnement donnés, éventuellement réduit à un espace de paramètres 1D, 2D, etc. de l'erreur entre le critère de qualité globale réelle calculé sur les lentilles de l'ensemble d'apprentissage et le critère de qualité globale attendu desdites lentilles, tel que fourni par le modèle, donnant un moyen de détecter un éventuel comportement non attendu du processus de fabrication sous contrôle, pour des conditions spécifiques concernant certaines valeurs des paramètres lentilles ou de l'environnement de l'espace des paramètres.

L'affichage peut être fourni sous la forme d'un tableau de bord représentant par exemple un score de qualité de machine de production à un certain moment. Chaque machine du laboratoire peut être représentée par exemple avec une barre d'erreur. L'importance du score de qualité de la machine peut être représenté par une couleur (par ex vert: ok, jaune, rouge: pas Ok), tandis que la longueur de la barre peut représenter la quantité de lentilles qui a été récemment produite par la machine.

Il est également possible d'obtenir un suivi continu de la qualité de la production pour contrôler la façon dont les machines produisent durant une période plus longue. L'évolution temporelle du score de qualité machine peut être monitorée pour plusieurs générateurs durant une certaine période. Dans la situation exemple proposée, un générateur démontre une erreur plus élevée durant toute la période de temps étudiée. L'analyse visuelle des cartes d'erreur confirme une erreur systématique. Il a également été confirmé par le laboratoire étudié que ce générateur est bien celui qui produit la plus grande quantité de rejets (non représenté).

Les scores de qualité de la machine peuvent également être utilisés pour détecter une dérive et pour savoir quand une maintenance est requise. Un logiciel de supervision pourrait détecter cette dérive et afficher un avertissement pour alerter le responsable du laboratoire et suggérer des actions.

La gestion des flux est souvent utilisée pour gérer et optimiser les flux de production en termes de quantité. En combinant cette approche avec les informations fournies par le score de qualité de la machine, il est maintenant possible de gérer les flux de production y intégrant la notion d'optimisation de la qualité.

Par exemple, si on voit sur le tableau de bord qu'un premier graveur fonctionne bien mais qu'il est peu utilisé, qu'un deuxième graveur n'est pas utilisé et qu'un troisième graveur, majoritairement utilisé, produit plus d'erreurs, un logiciel de supervision intelligente pourrait décider de répartir les lentilles entre les 2 premiers graveurs, au moins jusqu'à la résolution des problèmes sur le troisième (non représenté).

Selon certains modes de réalisation de l'invention, le procédé a une étape supplémentaire consistant à fournir une détection automatique des dérives du processus de fabrication sous contrôle, pour des conditions spécifiques concernant certaines valeurs de paramètres «lentille» ou d'environnement, par exemple une certaine zone de l'espace de paramètres.

Selon certains modes de réalisation de l'invention, le procédé comporte une étape supplémentaire permettant une détection automatique des dérives du processus de fabrication éventuellement hors de contrôle, pour des conditions spécifiques concernant certaines valeurs de paramètres «lentille» ou d'environnement, par exemple une certaine zone de l'espace de paramètres.

### Bibliographie

[1] FOGLIATTO, Flavio S., DA SILVEIRA, Giovani J.C., and BORENSTEIN, Denis. The mass customization decade: An updated review of the literature. Int. J. Production Economics, Elsevier, 2012, vol. 138, no 1, p. 14-25.

## Revendications

1. Procédé de modélisation et d'évaluation quantitative d'un niveau de qualité globale attendu d'une lentille ophtalmique en temps réel, ladite lentille ayant des paramètres lentille et d'environnement donnés, et étant produite par un processus numérique de fabrication de lentille, ledit procédé de modélisation et d'évaluation étant mis en œuvre par ordinateur et comprenant les étapes suivantes:
- la mise au point, sur la base d'un premier ensemble d'apprentissage sélectionné, représentatif, en vue de reproduire automatiquement et avec haute reproductibilité le travail d'évaluation d'un expert, constitué de lentilles mesurées produites par le processus de fabrication, d'un critère unique calculable numériquement de la qualité globale de fabrication de chaque lentille, fournissant pour chaque lentille fabriquée une quantification de qualité globale évaluée à partir de la carte des écarts entre la carte de puissance optique de référence/théorique respectivement par transmission ou de surface, et la carte de puissance optique réelle mesurée respectivement par transmission ou de surface, corrigée, ladite correction de la carte réelle mesurée de puissance étant réalisée sur base de la connaissance des écarts systématiques attendus lors d'une ou plusieurs des étapes du processus de fabrication maîtrisées et évaluées indépendamment, la carte des écarts correspondant à l'évaluation desdits écarts en un nombre approprié et suffisamment grand de points de mesure répartis sur la surface de la lentille;
- l'obtention et l'optimisation, par une méthode d'apprentissage, sur la base d'un second ensemble d'apprentissage sélectionné représentatif, constitué de lentilles mesurées produites par le processus de fabrication, d'un modèle mathématique fournissant une transformation entre les paramètres lentille et d'environnement de chaque lentille fabriquée et le critère de qualité globale attendu si cette lentille avait été produite en utilisant le processus de fabrication dans un état donné, généralement stable, ajusté et fixe, par le biais de la minimisation de la différence entre la sortie de modèle pour ledit critère de qualité globale de lentille et la valeur réelle calculée numériquement du critère de qualité globale de lentille sur la base dudit second ensemble d'apprentissage de lentilles mesurées sélectionné, ladite méthode d'apprentissage comprenant l'identification, sur base dudit second ensemble d'apprentissage de lentilles mesurées sélectionné, des paramètres lentille et d'environnement d'entrée pertinents jouant un rôle sur la qualité des lentilles produites durant une production normale, de sorte que la sortie du modèle du critère global unique mesurable de la qualité de chaque lentille soit basée sur un ensemble de paramètres sélectionnés parmi les paramètres lentille et d'environnement d'entrée pertinents.

2. Procédé de modélisation et d'évaluation en temps réel selon la revendication 1, **caractérisé en ce que** le nombre approprié et suffisamment grand de points de mesure répartis sur la surface de la lentille est déterminé sur base du théorème de Shannon en prenant en compte une fréquence spatiale maximale des écarts de puissance et est compris entre 100 et 100000, de préférence entre 1000 et 100000.

3. Procédé de modélisation et d'évaluation en temps réel selon la revendication 1, **caractérisé en ce que** le nombre approprié et suffisamment grand de points de mesure répartis sur la surface de la lentille est égal à 1000.

4. Procédé de modélisation et d'évaluation en temps réel selon la revendication 1, **caractérisé en ce que** la méthode d'apprentissage du modèle mathématique est une méthode d'apprentissage automatique supervisée ou non, comme une régression linéaire ou non-linéaire multivariée ou une analyse en composantes principales, PCA.

5. Procédé de modélisation et d'évaluation en temps réel selon la revendication 1, fournissant en outre un premier score de qualité, appelé "score de qualité du processus" pour le processus numérique de fabrication de lentilles, ledit score de qualité du processus étant calculé à partir d'évaluations numériques sur une seule lentille fabriquée ou sur un nombre limité de lentilles fabriquées en production normale, et indépendamment des variantes des paramètres lentille et de l'environnement, ledit procédé de modélisation et d'évaluation impliquant en outre les étapes suivantes:
- évaluer numériquement le critère de qualité globale mesurable pour chaque lentille traitée;
- sélectionner un nombre X de lentilles nécessaires à l'évaluation du score de qualité du processus numérique de fabrication de lentilles, indépendamment des variantes des paramètres lentille et de l'environnement, en tenant compte de la période allouée pour l'évaluation et/ou de considérations statistiques concernant l'influence de la limite du rapport signal sur bruit sur le « score de qualité du processus »;
- quantifier le « score de qualité du processus » à partir de la normalisation de la valeur réelle calculée du critère de qualité globale pour toute lentille produite par rapport à la valeur attendue du critère de qualité globale fournie par ledit modèle mathématique fournissant la transformation entre chaque lentille fabriquée et ses paramètres lentille et d'environnement et la valeur attendue du critère de qualité globale des lentilles pour un processus de fabrication dans un état donné, généralement stable, ajusté ou sous contrôle et fixe.

6. Procédé de modélisation et d'évaluation en temps réel selon la revendication 5, qui fournit en outre un second score de qualité, appelé "score de qualité de l'unité de production", pour toute unité de processus de fabrication numérique de lentilles à évaluer, appelée "unité évaluée", ledit score de qualité de l'unité étant calculé à partir d'évaluations sur une base limitée de lentilles fabriquées via une production normale, et indépendamment des variantes de paramètres lentille et d'environnement, ledit procédé de modélisation et d'évaluation impliquant en outre les étapes suivantes:
- enregistrement, pour toute unité de fabrication numérique de lentilles, du « score de qualité de processus » pour chaque lentille traitée;
- sélection d'un nombre Y de lentilles nécessaires à l'évaluation de l'unité de fabrication à évaluer, ou "unité évaluée", en tenant compte de la période allouée à l'évaluation et/ou de considérations statistiques concernant l'influence de la limite du rapport signal sur bruit sur le "score de qualité de l'unité" ;
- calcul du « score de qualité de l'unité » de « l'unité évaluée », en tant que « score de qualité de processus » moyen par rapport à toutes les lentilles Y traitées sur « l'unité évaluée ».

7. Procédé de modélisation et d'évaluation en temps réel selon la revendication 5, pour fournir un troisième score de qualité, appelé "score de qualité amélioré de l'unité de production", pour toute unité du processus de fabrication numérique de lentilles à évaluer, appelée "unité évaluée", ledit score de qualité amélioré étant calculé à partir d'évaluations sur une base limitée comportant un certain nombre de lentilles fabriquées en production normale, indépendamment des variantes de paramètres lentille et de l'environnement, et indépendamment de l'état de contrôle des autres unités impliquées dans le processus de fabrication, impliquant également les étapes suivantes:
- enregistrement, pour chaque unité de fabrication numérique de lentille, du « score de qualité de processus » pour chaque lentille traitée;
- détermination de toutes les unités de fabrication de lentilles ophtalmiques liées par un routage/flux de production de lentilles, appelées « unités liées à l'unité évaluée » ou « unités liées »;
- sélection d'un ensemble de lentilles Y traitées sur l'unité évaluée et / ou sur les "unités liées", ledit ensemble étant nécessaire pour l'évaluation de l'unité évaluée, en tenant compte de la période allouée pour l'évaluation et / ou des considérations statistiques concernant l'influence de la limite du rapport signal sur bruit sur le "score de qualité amélioré de l'unité";
- tout en tenant compte de l'ensemble des "scores de qualité des processus" pour l'ensemble sélectionné de lentilles Y et tous les routages correspondants, détermination mathématique du "score de qualité amélioré de l'unité de production" le plus probable de chaque unité à partir des unités évaluées et liées.

8. Procédé de modélisation et d'évaluation en temps réel selon la revendication 1, dans lequel un ajustement des paramètres du processus de fabrication est effectué, ce qui conduit à une quantification du niveau de qualité globale attendu en sortie du modèle mathématique d'une lentille, ayant des paramètres lentille et d'environnement, produite par un processus numérique de fabrication de lentilles avec ledit ajustement des paramètres du processus de fabrication.

9. Procédé de modélisation et d'évaluation en temps réel selon la revendication 1, complété d'une étape supplémentaire consistant à fournir un affichage, pour des lentilles sélectionnées et des paramètres d'environnement, éventuellement réduit à un espace de paramètres 1D, 2D, etc. de l'erreur entre le critère de qualité globale réel des lentilles évaluées du premier ensemble d'apprentissage et le critère de qualité globale attendu des lentilles, tel que fourni par le modèle, cet affichage fournissant alors un moyen de détecter un décrochage du processus de fabrication sous contrôle, pour des conditions spécifiques concernant certaines valeurs des paramètres lentille et / ou de l'environnement, par exemple, une partie de l'espace des paramètres.

10. Procédé de modélisation et d'évaluation selon la revendication 1, complété d'une étape supplémentaire consistant à fournir un affichage, pour des lentilles sélectionnées et des paramètres d'environnement, éventuellement réduit à un espace de paramètres 1D, 2D, ... de l'erreur entre le critère de qualité globale réel des lentilles mesurées et le critère de qualité globale attendu des lentilles tel que fourni par le modèle, cet affichage fournissant alors un moyen de détecter la dérive du processus de fabrication éventuellement hors de contrôle, pour des conditions spécifiques concernant certaines valeurs des paramètres lentille et / ou de l'environnement, par exemple, une partie de l'espace des paramètres.

11. Procédé de modélisation et d'évaluation en temps réel selon la revendication 9, comportant une étape supplémentaire fournissant une détection automatique des dérives du processus de fabrication sous contrôle, pour des conditions spécifiques concernant certaines valeurs de paramètres lentille et / ou d'environnement, par exemple une partie de l'espace des paramètres.

12. Procédé de modélisation et d'évaluation en temps réel selon la revendication 10, comportant une étape supplémentaire fournissant une détection automatique des dérives du processus de fabrication éventuellement hors de contrôle, pour des conditions spécifiques concernant certaines valeurs des paramètres lentille et / ou d'environnement, par exemple une partie de l'espace des paramètres.

13. Procédé de modélisation et d'évaluation en temps réel selon la revendication 5, dans lequel l'ajustement des paramètres du processus de fabrication est effectué, conduisant à une quantification du score de qualité du processus numérique de fabrication de lentilles ou du « score de qualité de processus », avec ledit ajustement des paramètres du processus de fabrication.

14. Procédé de modélisation et d'évaluation en temps réel selon la revendication 6 ou 7, dans lequel un ajustement des paramètres du processus de fabrication est effectué, ce qui conduit à une quantification du score de qualité de l'unité de traitement de fabrication de lentille ophtalmique numérique, ou "score de qualité de l'unité", avec les ajustements des paramètres du processus de fabrication.

15. Procédé de modélisation et d'évaluation en temps réel selon la revendication 6 ou 7, dans lequel on effectue un ajustement des paramètres de l'unité évaluée, conduisant à une quantification du score de qualité de toute unité du processus numérique de fabrication de lentille ophtalmique ou "score de qualité de l'unité", avec ledit ajustement des paramètres de l'unité.

## Patentansprüche

1. Verfahren zur Modellierung und quantitativen Evaluierung eines allgemeinen Qualitätsniveaus, das von einem Augenglas erwartet wird, in Echtzeit, wobei das Glas bestimmte Glas- und Umweltparameter hat und durch einen digitalen Glas-Produktionsprozess hergestellt wird, wobei das Modellierungs- und Evaluierungsverfahren durch Computer durchgeführt wird und die folgenden Schritte umfasst:
- das Erarbeiten, auf der Basis einer ersten ausgewählten repräsentativen Lerngesamtheit zwecks automatischer Reproduktion und mit hoher Reproduzierbarkeit der Evaluierungsarbeit eines Experten, bestehend aus gemessenen Gläsern, die durch den Produktionsprozess hergestellt wurden, eines einzigen digital berechenbaren Kriteriums der allgemeinen Herstellungsqualität jedes Glases, das für jedes hergestellte Glas eine Quantifizierung der allgemeinen Qualität bereitstellt, evaluiert auf der Basis der Karte der Abweichungen zwischen der Karte der optischen theoretischen/Referenzleistung jeweils durch Übertragung oder flächig und der korrigierten Karte der tatsächlich gemessenen optischen Leistung jeweils durch Übertragung oder flächig, wobei die Korrektur der Karte der tatsächlich gemessenen Leistung auf der Basis der Kenntnis der systematisch erwarteten Abweichungen bei einem oder mehreren beherrschten und unabhängig evaluierten Schritten des Produktionsprozesses erfolgt, wobei die Karte der Abweichungen der Evaluierung der Abweichungen in einer Anzahl entspricht, deren Messpunkte, die auf der Fläche des Glases verteilt sind, geeignet und ausreichend groß ist;
- das Erhalten und das Optimieren, durch eine Lernmethode, auf der Basis einer zweiten ausgewählten repräsentativen Lerngesamtheit, bestehend aus gemessenen Gläsern, die durch den Produktionsprozess hergestellt wurden, eines mathematischen Modells, das eine Transformation zwischen den Glas- und Umweltparametern jedes hergestellten Glases und das erwartete allgemeine Qualitätskriterium bereitstellt, wenn dieses Glas unter Verwendung des Produktionsprozesses in einem allgemein stabilen, angepassten und festen Zustand hergestellt wurde, über die Minimierung der Differenz zwischen der Modellausgabe für das allgemeine Glasqualitätskriterium und dem digital berechneten realen Wert des allgemeinen Glasqualitätskriteriums auf der Basis der zweiten ausgewählten Lerngesamtheit gemessener Gläser, wobei die Lernmethode die Identifizierung, auf der Basis der zweiten ausgewählten Lerngesamtheit gemessener Gläser, der relevanten Eingangs-Glas- und Umweltparameter umfasst, die die Qualität der Gläser beeinflussen, die in einer normalen Produktion hergestellt werden, so dass die Modellausgabe des messbaren einzigen allgemeinen Kriteriums der Qualität jedes Glases auf einer Gesamtheit von Parametern basiert, die aus den relevanten Eingangs-Glas- und Umweltparametern ausgewählt sind.

2. Verfahren zur Modellierung und Evaluierung in Echtzeit nach Anspruch 1, **dadurch gekennzeichnet, dass** die geeignete und ausreichend große Anzahl von Messpunkten, die auf der Fläche des Glases verteilt sind, auf der Basis des Shannon-Theorems bestimmt wird, unter Berücksichtigung einer maximalen räumlichen Frequenz der Leistungsabweichungen, und zwischen 100 und 100000, vorzugsweise zwischen 1000 und 100000, liegt.

3. Verfahren zur Modellierung und Evaluierung in Echtzeit nach Anspruch 1, **dadurch gekennzeichnet, dass** die geeignete und ausreichend große Anzahl von Messpunkten, die auf der Fläche des Glases verteilt sind, gleich 1000 ist.

4. Verfahren zur Modellierung und Evaluierung in Echtzeit nach Anspruch 1, **dadurch gekennzeichnet, dass** die Lernmethode des mathematischen Modells eine automatisch überwachte oder nicht überwachte Lernmethode ist, wie eine multivariante lineare oder nicht-lineare Regression oder eine Hauptkomponentenanalyse PCA.

5. Verfahren zur Modellierung und Evaluierung in Echtzeit nach Anspruch 1, das ferner einen ersten Qualitätsscore, bezeichnet als "Prozess-Qualitätsscore", für den digitalen Glas-Produktionsprozess bereitstellt, wobei der Prozess-Qualitätsscore ausgehend von digitalen Evaluierungen auf einem einzigen hergestellten Glas oder auf einer begrenzten Anzahl hergestellter Gläser in normaler Produktion und unabhängig von Glas- und Umweltparametervarianten berechnet wird, wobei das Modellierungs- und Evaluierungsverfahren ferner die folgenden Schritte impliziert:
- digitales Evaluieren des messbaren allgemeinen Qualitätskriterium für jedes behandelte Glas;
- Auswählen einer Anzahl X von Gläsern, die für die Evaluierung des Qualitätsscores des digitalen Glas-Produktionsprozesses notwendig sind, unabhängig von den Glas- und Umweltparametervarianten, unter Berücksichtigung des für die Evaluierung zugebilligten Zeitraums und/oder von statistischen Erwägungen bezüglich des Einflusses des Limits des Signal-Rausch-Verhältnisses auf den "Prozess-Qualitätsscore";
- Quantifizieren des "Prozess-Qualitätsscores" ausgehend von der Standardisierung des berechneten realen Werts des allgemeinen Qualitätskriteriums für jedes hergestellte Glas in Bezug auf den erwarteten Wert des allgemeinen Qualitätskriteriums, der von dem mathematischen Modell bereitgestellt wird, das die Transformation zwischen jedem produzierten Glas und seinen Glas- und Umweltparametern und dem erwarteten Wert des allgemeinen Qualitätskriteriums der Gläser für einen Produktionsprozess in einem bestimmten, allgemein stabilen, angepassten oder kontrollierten und festen Zustand bereitstellt.

6. Verfahren zur Modellierung und Evaluierung in Echtzeit nach Anspruch 5, das ferner einen zweiten Qualitätsscore, bezeichnet als "Qualitätsscore der Produktionseinheit", für jede digitale Produktionsprozesseinheit zu evaluierender Gläser, bezeichnet als "evaluierte Einheit", bereitstellt, wobei der Qualitätsscore der Einheit ausgehend von Evaluierungen auf einer limitierten Basis von in einer normalen Produktion hergestellten Gläsern und unabhängig von Glas- und Umweltparametervarianten berechnet wird, wobei das Modellierungs- und Evaluierungsverfahren ferner die folgenden Schritte impliziert:
- Speichern, für jede digitale Glasproduktionseinheit, des "Prozess-Qualitätsscores" für jedes behandelte Glas;
- Auswählen einer Anzahl Y von Gläsern, die für die Evaluierung der zu evaluierenden Produktionseinheit, oder "evaluierten Einheit", notwendig sind, unter Berücksichtigung des für die Evaluierung zugebilligten Zeitraums und/oder von statistischen Erwägungen bezüglich des Einflusses des Limits des Signal-Rausch-Verhältnisses auf den "Prozess-Qualitätsscore";
- Berechnen des "Qualitätsscores der Einheit" der "evaluierten Einheit" als mittlerer "Prozess-Qualitätsscore" in Bezug auf alle auf der "evaluierten Einheit" bearbeiteten Gläser Y.

7. Verfahren zur Modellierung und Evaluierung in Echtzeit nach Anspruch 5 zwecks Bereitstellung eines dritten Qualitätsscores, bezeichnet als "verbesserter Qualitätsscore der Herstellungseinheit", für jede Einheit des zu evaluierenden digitalen Glas-Produktionsprozesses, bezeichnet als "evaluierte Einheit", wobei der verbesserte Qualitätsscore ausgehend von Evaluierungen auf einer limitierten Basis berechnet wird, die eine bestimmte Anzahl von in normaler Produktion hergestellten Gläsern aufweist, unabhängig von den Glas- und Umweltparametervarianten und unabhängig vom Kontrollzustand der anderen Einheiten, die in den Produktionsprozess impliziert sind, bei Implikation ebenfalls der folgenden Schritte:
- Speichern, für jede digitale Glasproduktionseinheit, des "Prozess-Qualitätsscores" für jedes behandelte Glas;
- Bestimmen aller Augenglas-Produktionseinheiten, die durch ein/en Glasproduktions-Routing/-Strom verbunden sind, bezeichnet als "mit der evaluierten Einheit verbundene Einheiten" oder "verbundene Einheiten";
- Auswählen einer Gesamtheit von Gläsern Y, die auf der evaluierten Einheit und/oder auf den "verbundenen Einheiten" behandelt werden, wobei die Gesamtheit für die Evaluierung der evaluierten Einheit notwendig ist, unter Berücksichtigung des für die Evaluierung zugebilligten Zeitraums und/oder von statistischen Erwägungen bezüglich des Einflusses des Limits des Signal-Rausch-Verhältnisses auf den "verbesserten Qualitätsscore der Einheit";
- immer unter Berücksichtigung der Gesamtheit der "Prozess-Qualitätsscores" für die ausgewählte Gesamtheit von Gläsern Y und alle entsprechenden Routings, mathematische Bestimmung des wahrscheinlichsten "verbesserten Qualitätsscores der Produktionseinheit" jeder Einheit ausgehend von den evaluierten und verbundenen Einheiten.

8. Verfahren zur Modellierung und Evaluierung in Echtzeit nach Anspruch 1, wobei eine Anpassung der Parameter des Produktionsprozesses durchgeführt wird, was zu einer Quantifizierung des erwarteten allgemeinen Qualitätsniveaus ausgangs des mathematischen Modells eines Glases führt, mit Glas- und Umweltparametern, das in einem digitalen Glas-Produktionsprozess mit der Anpassung der Parameter des Produktionsprozesses hergestellt wird.

9. Verfahren zur Modellierung und Evaluierung in Echtzeit nach Anspruch 1, ergänzt durch einen zusätzlichen Schritt, der darin besteht, eine Anzeige für ausgewählte Gläser und Umweltparameter bereitzustellen, eventuell reduziert auf einen Parameterbereich 1D, 2D usw. des Fehlers zwischen dem realen allgemeinen Qualitätskriterium der evaluierten Gläser der ersten Lerngesamtheit und dem erwarteten allgemeinen Qualitätskriterium der Gläser, so wie vom Modell bereitgestellt, wobei diese Anzeige dann ein Mittel bereitstellt, um eine Abkopplung vom kontrollierten Produktionsprozess für spezielle Bedingungen festzustellen, die bestimmte Werte der Glas- und/oder Umweltparameter, beispielsweise einen Teil des Parameterbereichs, betreffen.

10. Verfahren zur Modellierung und Evaluierung nach Anspruch 1, ergänzt durch einen zusätzlichen Schritt, der darin besteht, eine Anzeige für ausgewählte Gläser und Umweltparameter bereitzustellen, eventuell reduziert auf einen Parameterbereich 1D, 2D,
.. des Fehlers zwischen dem realen allgemeinen Qualitätskriteriums der gemessenen Gläser und dem erwarteten allgemeine Qualitätskriterium der Gläser, so wie vom Modell bereitgestellt, wobei diese Anzeige dann ein Mittel bereitstellt, um die Abweichung vom Produktionsprozess, der eventuell außer Kontrolle ist, für spezielle Bedingungen festzustellen, die bestimmte Werte der Glas- und/oder Umweltparameter, beispielsweise einen Teil des Parameterbereichs, betreffen.

11. Verfahren zur Modellierung und Evaluierung in Echtzeit nach Anspruch 9, aufweisend einen zusätzlichen Schritt, der eine automatische Detektion der Abweichungen vom kontrollierten Produktionsprozess für spezielle Bedingungen bereitstellt, die bestimmte Werte von Glas- und/oder Umweltparametern, beispielsweise einen Teil des Parameterbereichs, betreffen.

12. Verfahren zur Modellierung und Evaluierung in Echtzeit nach Anspruch 10, aufweisend einen zusätzlichen Schritt, der eine automatische Detektion der Abweichungen vom Produktionsprozess, der eventuell außer Kontrolle ist, für spezielle Bedingungen bereitstellt, die bestimmte Werte der Glas- und/oder Umweltparameter, beispielsweise einen Teil des Parameterbereichs, betreffen.

13. Verfahren zur Modellierung und Evaluierung in Echtzeit nach Anspruch 5, wobei die Anpassung der Parameter des Produktionsprozesses, was zu einer Quantifizierung des Qualitätsscores des digitalen Glas-Produktionsprozesses oder des "Prozess-Qualitätsscores" führt, mit der Anpassung der Parameter des Produktionsprozesses durchgeführt wird.

14. Verfahren zur Modellierung und Evaluierung in Echtzeit nach Anspruch 6 oder 7, wobei eine Anpassung der Parameter des Produktionsprozesses, was zu einer Quantifizierung des Qualitätsscores der digitalen Herstellungsbearbeitungseinheit eines Augenglases oder des "Qualitätsscores der Einheit" führt, mit den Anpassungen der Parameter des Produktionsprozesses durchgeführt wird.

15. Verfahren zur Modellierung und Evaluierung in Echtzeit nach Anspruch 6 oder 7, wobei eine Anpassung der Parameter der evaluierten Einheit, was zu einer Quantifizierung des Qualitätsscores jeder Einheit des digitalen Produktionsprozesses eines Augenglases oder des "Qualitätsscores der Einheit" führt, mit der Anpassung der Parameter der Einheit durchgeführt wird.

## Claims

1. A method for modelling and quantitatively evaluating the global quality level expected of an ophthalmic lens in real time, said lens having particular lens and environment parameters, and being produced by a digital lens manufacturing process, said modelling and evaluation method being computer-implemented and comprising the following steps:
- based on a first selected, representative learning set of measured lenses produced by the manufacturing process, setting up, with a view to automatically and with high repeatability reproduce an expert's evaluation work, a single computable criterion of the global manufacturing quality of each lens, providing for every manufactured lens a global quality quantification that is evaluated from the deviation map between the reference or theoretical respectively through or surface optical power map and the actual measured and corrected through or surface respectively optical power map, said correction of the actual measured power map being performed based on the knowledge of the systematic deviations expected during one or more of the manufacturing process steps, independently controlled and evaluated, the deviation map corresponding to the evaluation of said deviations in an appropriate and sufficiently large number of measurement points spread over the lens surface;
- based on a second selected representative learning set of measured lenses produced by the manufacturing process, obtaining and optimizing by a learning method a mathematical model providing a transformation between the lens and environment parameters of each lens manufactured and the expected global quality criterion if this lens had been produced using the manufacturing process in a given, generally stable, adjusted and fixed state, by minimizing the difference between the model output for said global quality criterion of the lens and the actual computed value of the global quality criterion of the lens, based on said second selected learning set of measured lens, said learning method comprising, based on said second selected learning set of measured lens, the identification of relevant input lens and environment parameters playing a role on the quality of the lens produced during normal production, so that the model output of the unique measurable global quality criterion of each lens will be based on a set of parameters selected from among the relevant input lens and environment parameters.

2. The real-time modelling and evaluation method according to Claim 1, **characterized in that** the appropriate and sufficiently large number of measurement points spread over the lens surface is determined on the basis of the Shannon theorem, taking into account a maximal spatial frequency of the power deviations and is comprised between 100 and 100,000, preferably between 1,000 and 100,000.

3. The real-time modelling and evaluation method according to Claim 1, **characterized in that** the appropriate and sufficiently large number of measurement points spread over the lens surface is 1,000.

4. The real-time modelling and evaluation method according to Claim 1, **characterized in that** the learning method of the mathematical model is an automatic learning method, supervised or not, as a linear or non-linear multivariate regression or a principal component analysis, PCA.

5. The real-time modelling and evaluation method according to Claim 1, **characterized in that** it further provides a first quality score, called "process quality score", for the digital lens manufacturing process, said process quality score being calculated from digital evaluations on a single lens manufactured or on a limited number of lenses manufactured by normal production, and independently of the variants of the lens and environment parameters, said modelling and evaluation method further involving the following steps:
- digitally evaluating the measurable global quality criterion for each lens processed;
- selecting a number X of lenses required for evaluating the quality score of the digital lens manufacturing process, independently of the variants of the lens and environment parameters, taking into account the period of time allocated for the evaluation and/or statistical considerations related to the influence of the signal-to-noise ratio limit on the "process quality score";
- quantifying the "process quality score" from the normalization of the actual calculated value of the global quality criterion for each lens manufactured relative to the expected value of the global quality criterion provided by said mathematical model, providing the transformation between each manufactured lens and its lens and environment parameters and the expected value of the global quality criterion of the lenses for a manufacturing process in a given state, generally stable, adjusted or under control and fixed.

6. The real-time modelling and evaluation method according to Claim 5, **characterized in that** it further provides a second quality score, called "quality score of the manufacturing unit", for any digital lens manufacturing process unit to be evaluated, called "evaluated unit", said unit quality score being calculated from evaluations based on a limited number of lenses manufactured by normal production, and independently of the variants of the lens and environment parameters, said modelling and evaluation method further involving the following steps:
- for any digital lens manufacturing unit, recording the "process quality score" for each lens processed;
- selecting a number Y of lenses required for evaluating the manufacturing unit to be evaluated, or "evaluated unit", taking into account the period of time allocated for the evaluation and/or statistical considerations related to the influence of the signal-to-noise ratio limit on the "unit quality score";
- calculating the "unit quality score" of the "evaluated unit", as an average "process quality score" relative to all the Y lenses processed on the "evaluated unit".

7. The real-time modelling and evaluation method according to Claim 5, **characterized in that** it provides a third quality score, called "improved quality score of the manufacturing unit", for any digital lens manufacturing process unit to be evaluated, called "evaluated unit", said improved unit quality score being calculated from evaluations based on a limited number of lenses manufactured by normal production, independently of the variants for lens and environment parameters, and independently of the control state of the other units involved in the manufacturing process, said method further involving the following steps:
- for each digital lens manufacturing unit, recording the "process quality score" for each lens processed;
- determining all the ophthalmic lens manufacturing units linked by a lens production routing/flow, called "units linked to the evaluated unit" or "linked units";
- selecting a set of lenses Y processed on the evaluated unit and/or on the "linked units", said set being required for evaluating the evaluated unit, taking into account the period of time allocated for the evaluation and/or statistical considerations related to the influence of the signal-to-noise ratio limit on the "improved quality score of the unit";
- while taking into account the set of "process quality scores" for the selected set of lenses Y and all the corresponding routings, mathematically determining the most probable "improved unit quality score of the manufacturing unit" for each unit from the evaluated and linked units.

8. The real-time modelling and evaluation method according to Claim 1, **characterized in that** the manufacturing process parameters are adjusted, resulting in a quantification of the expected global quality level given by the mathematical model for a lens, having lens and environment parameters, produced by a digital lens manufacturing process with said adjustment of the manufacturing process parameters.

9. The real-time modelling and evaluation method according to Claim 1, **characterized in that** it comprises an additional step of providing a display, for selected lenses and for environment parameters, possibly reduced to a 1D, 2D, etc. parameter space, of the error between the actual global quality criterion of the measured lenses of the first learning set and the expected global quality criterion of the lenses as provided by the model, this display thus providing a means for detecting dropout of the manufacturing process under control, for specific conditions regarding specific values of lens and/or environment parameters, for example part of the parameter space.

10. The modelling and evaluation method according to Claim 1, **characterized in that** it comprises an additional step of providing a display, for selected lenses and environment parameters, possibly reduced to a 1D, 2D, etc. parameter space, of the error between the actual global quality criterion of measured lenses and the expected global quality criterion of the lenses as provided by the model, this display providing a means for detecting drift of the manufacturing process possibly out of control, for specific conditions regarding particular values of lens and/or environment parameters, for example part of the parameter space.

11. The real-time modelling and evaluation method according to Claim 9, **characterized in that** it comprises an additional step of providing an automatic detection of the drifts of the manufacturing process under control, for specific conditions regarding particular values of lens and/or environment parameters, for example part of the parameter space.

12. The real-time modelling and evaluation method according to Claim 10, **characterized in that** it comprises an additional step providing an automatic detection of the drifts of the manufacturing process possibly out of control, for specific conditions regarding particular values of lens and/or environment parameters, for example part of the parameter space.

13. The real-time modelling and evaluation method according to Claim 5, **characterized in that** the manufacturing process parameters are adjusted, resulting in the quantification of the quality score of the digital lens manufacturing process or "process quality score", with said adjustment of the manufacturing process parameters.

14. The real-time modelling and evaluation method according to Claim 6 or 7, **characterized in that** the manufacturing process parameters are adjusted, resulting in the quantification of the quality score of the digital ophthalmic lens manufacturing process unit, or "unit quality score", with said adjustments of the manufacturing process parameters.

15. The real-time modelling and evaluation method according to Claim 6 or 7, **characterized in that** the evaluated unit parameters are adjusted, resulting in the quantification of the quality score of any digital ophthalmic lens manufacturing process unit, or "unit quality score", with said adjustment of the unit parameters.
